# EUROPEAN PATENT APPLICATION

(11) **EP 3 136 216 A1**
(43) Date of publication of application: **01.03.2017**
(21) Application number: 16156773.0
(22) Date of filing: 22.02.2016
(51) Int. Cl.: G06F 3/0488, G06F 1/16

(54) **METHOD FOR CONTROLLING MOBILE TERMINAL AND MOBILE TERMINAL**

(30) Priority: 28.08.2015 CN 201510544118
(71) Applicant: Xiaomi Inc., Beijing 100085 (CN)
(72) Inventor: LI, Guosheng, 100085 Haidian District (CN); LI, Weishan, 100085 Haidian District (CN); LIU, Dan, 100085 Haidian District (CN)
(74) Representative: Loustalan, Paul William

(57) **Abstract**

Described is a mobile terminal and a method for controlling the mobile terminal. The method includes: detecting (101, 201, 301) a touch signal triggered by touch operation of an operating body on a side of a mobile terminal; determining (102, 202, 302) a touch position and touch manner corresponding to the touch operation according to the touch signal; determining (103, 203, 303) a corresponding control event according to the touch position and the touch manner; and controlling (104, 204, 304) the mobile terminal according to the control event.

## Description

### TECHNICAL FIELD

The present disclosure generally relates to the technical field of mobile terminals, and more particularly, to a mobile terminal and a method for controlling a mobile terminal.

### BACKGROUND

Along with development of a mobile terminal technology, a touch operating manner has been applied to a mobile terminal to substitute for a physical key operating manner, and such an operating manner is the most important human-computer interaction manner for a mobile terminal. At present, a user performs operation to implement various functions in a mobile terminal mainly via a Touch Panel (TP) in a liquid crystal screen of the mobile terminal.

### SUMMARY

Accordingly, the present invention provides a mobile terminal and a method for controlling a mobile terminal, in accordance with claims which follow.

According to a first aspect of the present disclosure, a method for controlling a mobile terminal is provided, a side TP being arranged in the mobile terminal, the method including:
detecting a touch signal triggered by touch operation of an operating body on a side of the mobile terminal;
determining a touch position and touch manner corresponding to the touch operation according to the touch signal;
determining a corresponding control event according to the touch position and the touch manner; and
controlling the mobile terminal according to the control event.

Thus, the touch signal triggered by the touch operation of the operating body on the side of the mobile terminal is detected by the side TP arranged in the mobile terminal, the touch position and touch manner corresponding to the touch operation are determined according to the touch signal, the control event is determined according to the touch position and the touch manner, and the mobile terminal is controlled according to the control event, so that control over the mobile terminal is implemented by the touch operation on the side of the mobile terminal outside a touch area of a screen, and human-computer interactivity is improved.

According to a particular embodiment, the step of determining the corresponding control event according to the touch position and the touch manner may include:
selecting the control event corresponding to the touch position and the touch manner from a preset relationship among a touch position, a touch manner and a control event.

According to a particular embodiment, the touch position may include a combination of multiple touch positions, and the touch manner may include a touch manner corresponding to each touch position; and
the step of determining the corresponding control event according to the touch position and the touch manner may include:
selecting a control event corresponding to the combination of the multiple touch positions and the touch manner corresponding to each touch position from the preset relationship among the touch position, the touch manner and the control event.

According to a particular embodiment, the method may further include:
setting an option menu configured to configure side touch operation in a system option.

According to a particular embodiment, the method may further include:
recording touch operation of the operating body on the side TP after a user is detected to trigger configuration operation in the option menu, the touch operation including a touch position and a touch manner;
receiving a control event selected by the user in the option menu; and
storing the touch position, the touch manner and the control event in the preset relationship among the touch position, the touch manner and the control event.

According to a particular embodiment, the control event may include starting a specified application-level application program or executing a system bottom-layer control instruction and the touch manner may include one or more of single-click, double-click, long-click and swipe.

According to a second aspect of the present disclosure, a mobile terminal is provided, a side TP being arranged in the mobile terminal, the mobile terminal including:
a detection module, configured to detect a touch signal triggered by touch operation of an operating body on a side of the mobile terminal;
a first determination module, configured to determine a touch position and touch manner corresponding to the touch operation according to the touch signal;
a second determination module, configured to determine a corresponding control event according to the touch position and the touch manner; and
a control module, configured to control the mobile terminal according to the control event.

The advantages and technical effects of the mobile terminal according to the invention correspond to those of the method presented above.

According to a particular embodiment, the determination module may include:
a first selection unit, configured to select the control event corresponding to the touch position and the touch manner from a preset relationship among a touch position, a touch manner and a control event.

According to a particular embodiment, the touch position may include a combination of multiple touch positions, and the touch manner may include a touch manner corresponding to each touch position; and
the determination module may include:
a second selection unit, configured to select a control event corresponding to the combination of the multiple touch positions and the touch manner corresponding to each touch position from the preset relationship among the touch position, the touch manner and the control event.

According to a particular embodiment, the mobile terminal may further include:
a setting module, configured to set an option menu configured to configure side touch operation in a system option.

According to a particular embodiment, the mobile terminal may further include:
a recording module, configured to record touch operation of the operating body on the side TP after a user is detected to trigger configuration operation in the option menu, the touch operation including a touch position and a touch manner;
a receiving module, configured to receive a control event selected by the user in the option menu; and
a storage module, configured to store the touch position, the touch manner and the control event in the preset relationship among the touch position, the touch manner and the control event.

According to a particular embodiment, the control event may include starting a specified application-level application program or executing a system bottom-layer control instruction and the touch manner may include one or more of single-click, double-click, long-click and swipe.

According to a third aspect of the embodiment of the present disclosure, a mobile terminal is provided, a side TP being arranged in the mobile terminal, the mobile terminal including:
a processor; and
a memory configured to store instructions executable by the processor,
wherein the processor is configured to:
   detect a touch signal triggered by touch operation of an operating body on a side of the mobile terminal;
   determine a touch position and touch manner corresponding to the touch operation according to the touch signal;
   determine a corresponding control event according to the touch position and the touch manner; and
   control the mobile terminal according to the control event.

The processor may be further configured to carry out the methods of controlling a mobile terminal as described herein.

In one particular embodiment, the steps of the method for controlling a mobile terminal are determined by computer program instructions.

Consequently, according to a fourth aspect, the invention is also directed to a computer program for executing the steps of a method for controlling a mobile terminal as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

It is to be understood that both the foregoing general description and the following detailed description are exemplary and explanatory only and are not restrictive of the present disclosure.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart showing a method for controlling a mobile terminal according to an exemplary embodiment.
Fig. 2 is a flow chart showing a method for controlling a mobile terminal according to an exemplary embodiment.
Fig. 3 is a flow chart showing a method for controlling a mobile terminal according to an exemplary embodiment.
Fig. 4 is a flow chart showing a method for controlling a mobile terminal according to an exemplary embodiment.
Fig. 5 is a block diagram illustrating a mobile terminal according to an exemplary embodiment.
Fig. 6 is a block diagram illustrating a determination module in a mobile terminal according to an exemplary embodiment.
Fig. 7 is a block diagram illustrating a mobile terminal (general structure of the mobile terminal) according to an exemplary embodiment.

### DETAILED DESCRIPTION

In order to make clearer a purpose, technical solutions and advantages of the present disclosure, the embodiments of the present disclosure will be further described below with reference to the accompanying drawings in detail.

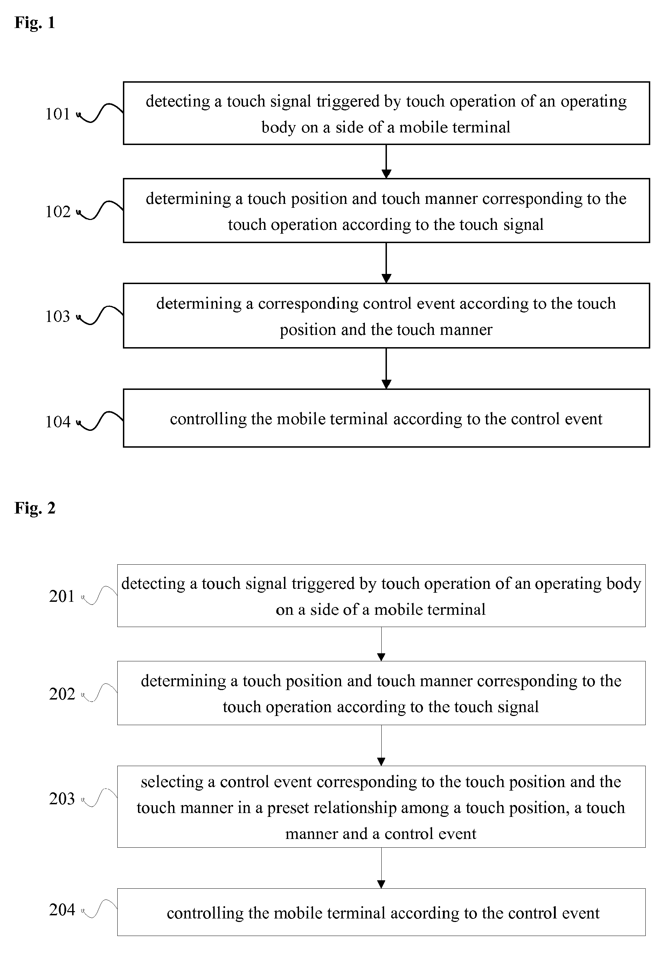

An exemplary embodiment of the present disclosure provides a method for controlling a mobile terminal. As shown in Fig. 1, the embodiment of the present disclosure is applied to a mobile terminal, a side TP is arranged in the mobile terminal, and the method includes:
Step 101: detecting a touch signal triggered by touch operation of an operating body on a side of the mobile terminal;
Step 102: determining a touch position and touch manner corresponding to the touch operation according to the touch signal;
Step 103: determining a corresponding control event according to the touch position and the touch manner; and
Step 104: controlling the mobile terminal according to the control event.

In the embodiment, an arrangement manner for the side TP arranged in the mobile terminal may include, but not limited to, the following manners:
under a first condition, the side TP is arranged on the side of the mobile terminal; and
under a second condition, the side TP is not arranged on the side of the mobile terminal, but a TP over a liquid crystal panel, instead of the side TP, senses touch operations on the side of the mobile terminal.

According to the embodiment of the present disclosure, the touch signal triggered by the touch operation of the operating body on the side of the mobile terminal is detected by the side TP arranged in the mobile terminal, the touch position and touch manner corresponding to the touch operation are determined according to the touch signal, the control event is determined according to the touch position and the touch manner, and the mobile terminal is controlled according to the control event, so that control over the mobile terminal is implemented by the touch operation on the side of the mobile terminal outside a touch area of a screen, and human-computer interactivity is improved.

Another exemplary embodiment of the present disclosure provides a method for controlling a mobile terminal. As shown in Fig. 2, the embodiment of the present disclosure is applied to a mobile terminal, a side TP is arranged in the mobile terminal, and the method includes the following steps.

Step 201: detecting a touch signal triggered by touch operation of an operating body on a side of the mobile terminal.

Herein, the mobile terminal detects the touch operation of the operating body on the side of the mobile terminal through the side TP in the step.

Optionally, a user may divide touchable positions of the side of the mobile terminal in advance to obtain multiple touchable position areas in a manner of initial configuration and the like, and a unique coordinate identifier is set for each area. Accordingly, a touch position involved in the touch operation of the operating body on the side of the mobile terminal may be represented by a corresponding coordinate identifier. Herein, detection of the touch operation on the side of the mobile terminal may be detection of only one side, and may also be detection of two sides, and there are no limits.

When the user performs touch operation on the side of the mobile terminal, the touch signal may be generated by the triggering of the side TP, and the touch signal includes a touch position and a touch manner during the touch operation, which is detected by the side TP, of the user on the side of the mobile terminal.

Step 202: determining the touch position and touch manner corresponding to the touch operation according to the touch signal.

Herein, the touch position in the touch signal may be the coordinate identifier of the touchable position area, which is detected by the side TP, on the side of the mobile terminal.

Herein, the touch manner in the touch signal may include one or more of single-click, double-click, long-click and swipe. The touch manner is determined to be double-click if time between two single-clicks of the operating body at the same touch position is detected to be smaller than a first preset time length; the touch manner is determined to be long-click if time for single-click of the operating body over a certain touch position is detected to reach a second preset time length; and the touch manner is determined to be swipe if the operating body is detected to continue moving in a certain direction after touching a certain touch position.

In addition, when the touch manner is swipe, the touch position may pass through multiple preset touchable position areas, and in this case, the touch position may include one or more coordinate identifiers.

In the embodiment, the touch operation is touch operation of the operating body on the side of the mobile terminal, a touch position in a corresponding touch signal is one or more coordinate identifiers detected after the touch operation of the operating body on the side of the mobile terminal, and a touch manner is a touch manner detected after the touch operation of the operating body on the side of the mobile terminal.

For example, when the user performs single-click touch operation in a certain preset touchable position area on the side of the mobile terminal with a finger, a corresponding touch signal may be triggered.

Step 203: selecting a control event corresponding to the touch position and the touch manner in a preset relationship among a touch position, a touch manner and a control event.

Herein, in the embodiment, content stored in the relationship among the touch position, the touch manner and the control even is a relationship between one control event and one touch position, one touch manner.

Herein, the control event includes starting a specified application-level application program or executing a system bottom-layer control instruction.

Herein, the application-level application program may be a third-party application program installed by the user, for example, an instant messaging application, a social network application, a photographing application, a picture processing application and so on, and may also be an application-level application program provided by a system, for example, a contact list application, a scratchpad application and so on.

The system bottom-layer control instruction may be a certain function for controlling the mobile terminal, for example, a telephone answering control instruction, a screen unlocking control instruction, a screen locking control instruction and so on.

Step 204: controlling the mobile terminal according to the control event.

According to the control event, an application program may be started or a system control instruction may be executed to implement a manner of controlling the mobile terminal by virtue of the touch operation of the operating body on the side of the mobile terminal.

According to the embodiment of the present disclosure, the touch operation of the operating body on the side of the mobile terminal is detected by the side TP arranged in the mobile terminal, the control event is determined according to the touch position and touch manner in the touch operation, and the mobile terminal is controlled according to the control event, so that control over the mobile terminal is implemented by the touch operation on the side of the mobile terminal outside a touch area of a screen, and human-computer interactivity is improved.

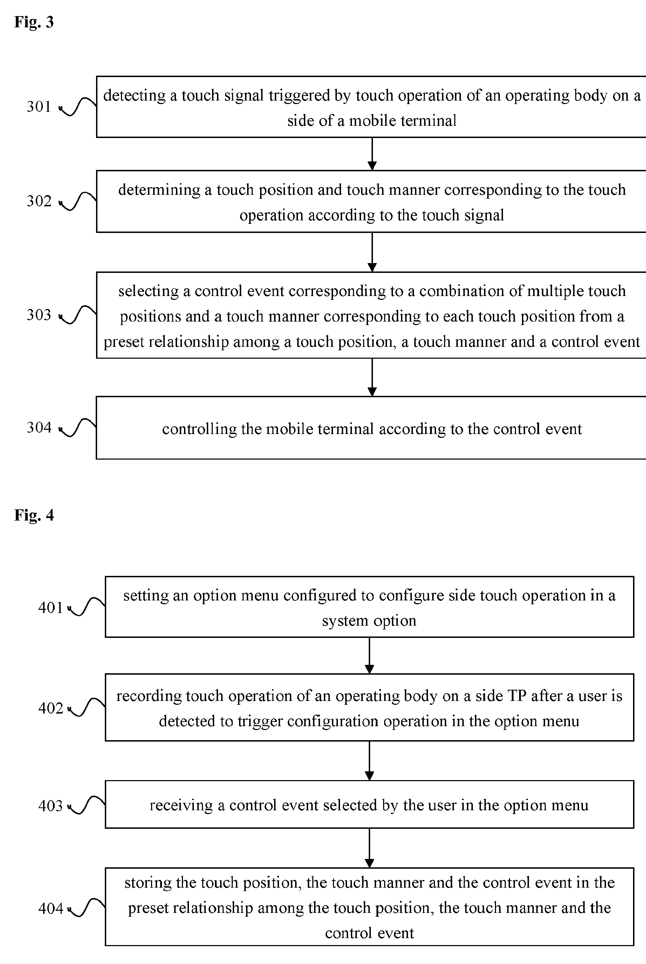

Another exemplary embodiment of the present disclosure provides a method for controlling a mobile terminal. As shown in Fig. 3, the embodiment of the present disclosure is applied to a mobile terminal, a side TP is arranged in the mobile terminal, and the method includes the following steps.

Step 301: detecting a touch signal triggered by touch operation of an operating body on a side of the mobile terminal.

Herein, the touch operation on the side of the mobile terminal is detected by the side TP in the step.

Optionally, touchable positions of the side of the mobile terminal may be divided in advance to obtain multiple touchable position areas, and a unique coordinate identifier is set for each area. Accordingly, a touch position involved in the touch operation of the operating body on the side of the mobile terminal may be represented by a corresponding coordinate identifier. Herein, detection of the touch operation on the side of the mobile terminal may be detection of one side, and may also be detection of two sides, and there are no limits.

When a user performs touch operation on the side of the mobile terminal, the touch signal may be generated by the triggering of the side TP, and the touch signal includes a touch position and a touch manner during the touch operation, which is detected by the side TP, of the user on the side of the mobile terminal.

Step 302: determining the touch position and touch manner corresponding to the touch operation according to the touch signal.

Herein, the touch position in the touch signal may be the coordinate identifier of the touchable position area, which is detected by the side TP, on the side of the mobile terminal.

Herein, the touch manner in the touch signal may include one or more of single-click, double-click, long-click and swipe. The touch manner is determined to be double-click if time between two single-clicks of the operating body at the same touch position is detected to be smaller than a first preset time length; the touch manner is determined to be long-click if time for single-click of the operating body over a certain touch position is detected to reach a second preset time length; and the touch manner is determined to be swipe if the operating body is detected to continue moving in a certain direction after touching a certain touch position.

In addition, when the touch manner is swipe, the touch position may pass through multiple preset touchable position areas, and in this case, the touch position may include one or more coordinate identifiers.

In the embodiment, the touch operation is touch operation of multiple operating bodies on the side of the mobile terminal, a touch position in a corresponding touch signal is a combination of multiple touch positions, i.e. a combination of multiple coordinate identifiers, detected after the touch operation of the multiple operating bodies on the side of the mobile terminal, a touch manner is a touch manner detected after the touch operation of each operating body on the side of the mobile terminal, and the corresponding touch manner includes a touch manner corresponding to each touch position.

For example, when the user performs single-click touch operation in two certain preset touchable position areas on the side of the mobile terminal with two fingers, a corresponding touch signal may be triggered.

Step 303: selecting a control event corresponding to the combination of the multiple touch positions and the touch manner corresponding to each touch position from a preset relationship among a touch position, a touch manner and a control event.

Herein, in the embodiment, content stored in the relationship among the touch position, the touch manner and the control event is a relationship between one control event and a combination of multiple touch positions and one touch manner corresponding to each touch position.

Herein, the control event includes starting a specified application-level application program or executing a system bottom-layer control instruction.

Herein, the application-level application program may be a third-party application program installed by the user, for example, an instant messaging application, a social network application, a photographing application, a picture processing application and so on, and may also be an application-level application program provided by a system, for example, a contact list application, a scratchpad application and so on.

Herein, the system bottom-layer control instruction may be a certain function for controlling the mobile terminal, for example: a telephone answering control instruction, a screen unlocking control instruction, a screen locking control instruction and so on.

Step 304: controlling the mobile terminal according to the control event.

According to the control event, an application program may be started or a system control instruction may be executed to implement a manner of controlling the mobile terminal by virtue of the touch operation of the operating body on the side of the mobile terminal.

According to the embodiment of the present disclosure, the touch signal triggered by the touch operation of the operating bodies on the side of the mobile terminal is detected by the side TP arranged in the mobile terminal, the touch position and touch manner corresponding to the touch operation are determined according to the touch signal, the control event is determined according to the touch position and the touch manner, and the mobile terminal is controlled according to the control event, so that control over the mobile terminal is implemented by the touch operation on the side of the mobile terminal outside a touch area of a screen, and human-computer interactivity is improved.

Another exemplary embodiment of the present disclosure provides a method for controlling a mobile terminal. As shown in Fig. 4, the embodiment of the present disclosure is applied to a mobile terminal, a side TP is arranged in the mobile terminal, and the method includes the following steps.

Step 401: setting an option menu configured to configure side touch operation in a system option.

In the option menu, configuration operation over the side touch operation may be triggered. A user may set a touch position and a touch manner by himself/herself in a configuration process.

In addition, an optional list corresponding to a control event may also be configured in the option menu, and the optional list includes an application program identifier of each application level and a system bottom-layer control instruction identifier.

The user may store the set contents in a preset relationship among a touch position, a touch manner and a control event after setting the touch position, the touch manner and the control event respectively.

Step 402: recording touch operation of an operating body on the side TP after the user is detected to trigger the configuration operation in the option menu, the touch operation including a touch position and a touch manner.

In the step, when the user triggers the configuration operation in the option menu, the side TP may detect the touch operation of the user on the side of the mobile terminal so as to set the side touch operation.

Step 403: receiving a control event selected by the user in the option menu.

In the step, the user may select a control event to be set from the optional list corresponding to the control event.

Step 404: storing the touch position, the touch manner and the control event in the preset relationship among the touch position, the touch manner and the control event.

According to the embodiment of the present disclosure, in a manner of setting the side touch operation through the option menu configured to configure the side touch operation in the mobile terminal, the user may define the control event corresponding to the touch operation on the side of the mobile terminal, and human-computer interactivity is improved.

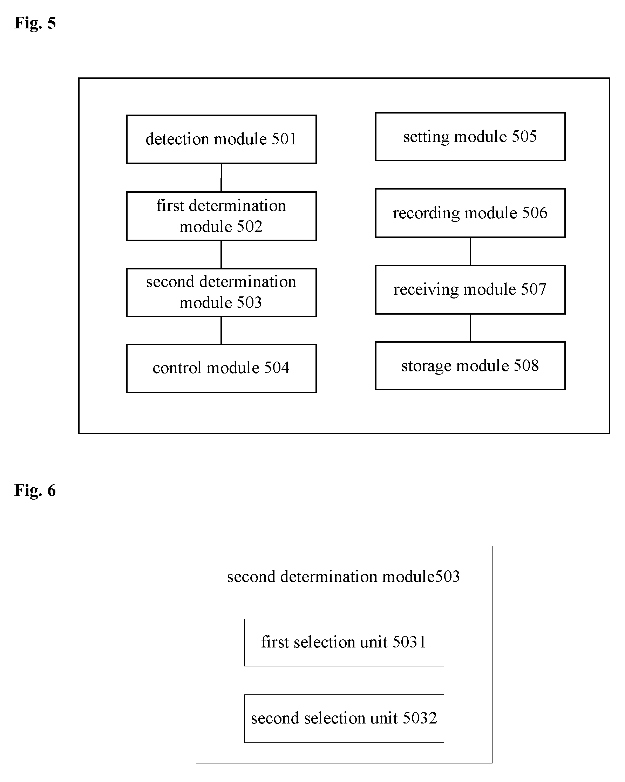

Corresponding to the method for controlling a mobile terminal provided by the above exemplary embodiments, another exemplary embodiment of the present disclosure provides a mobile terminal, a side TP being arranged in the mobile terminal. As shown in Fig. 5, the mobile terminal may include:
a detection module 501, configured to detect a touch signal triggered by touch operation of an operating body on a side of the mobile terminal;
a first determination module 502, configured to determine a touch position and touch manner corresponding to the touch operation according to the touch signal;
a second determination module 503, configured to determine a corresponding control event according to the touch position and the touch manner; and
a control module 504, configured to control the mobile terminal according to the control event.

Herein, the second determination module 503 may, as shown in Fig. 6, include:
a first selection unit 5031, configured to select the control event corresponding to the touch position and the touch manner from a preset relationship among a touch position, a touch manner and a control event.

Herein, the touch position may include a combination of multiple touch positions, and the touch manner may include a touch manner corresponding to each touch position.

As shown in Fig. 6, the second determination module 503 may include:
a second selection unit 5032, configured to select a control event corresponding to the combination of the multiple touch positions and the touch manner corresponding to each touch position from the preset relationship among the touch position, the touch manner and the control event.

Herein, the mobile terminal may, as shown in Fig. 5, further include:
a setting module 505, configured to set an option menu configured to configure side touch operation in a system option.

Herein, the mobile terminal may, as shown in Fig. 5, further include:
a recording module 506, configured to record touch operation of the operating body on the side TP after a user is detected to trigger configuration operation in the option menu, the touch operation including a touch position and a touch manner;
a receiving module 507, configured to receive a control event selected by the user in the option menu; and
a storage module 508, configured to store the touch position, the touch manner and the control event in the preset relationship among the touch position, the touch manner and the control event.

Herein, the control event includes starting a specified application-level application program or executing a system bottom-layer control instruction.

Herein, the touch manner may include one or more of single-click, double-click, long-click and swipe.

According to the embodiment of the present disclosure, the touch signal triggered by the touch operation of the operating body on the side of the mobile terminal is detected by the side TP arranged in the mobile terminal, the touch position and touch manner corresponding to the touch operation are determined according to the touch signal, the control event is determined according to the touch position and the touch manner, and the mobile terminal is controlled according to the control event, so that control over the mobile terminal is implemented by the touch operation on the side of the mobile terminal outside a touch area of a screen, and human-computer interactivity is improved.

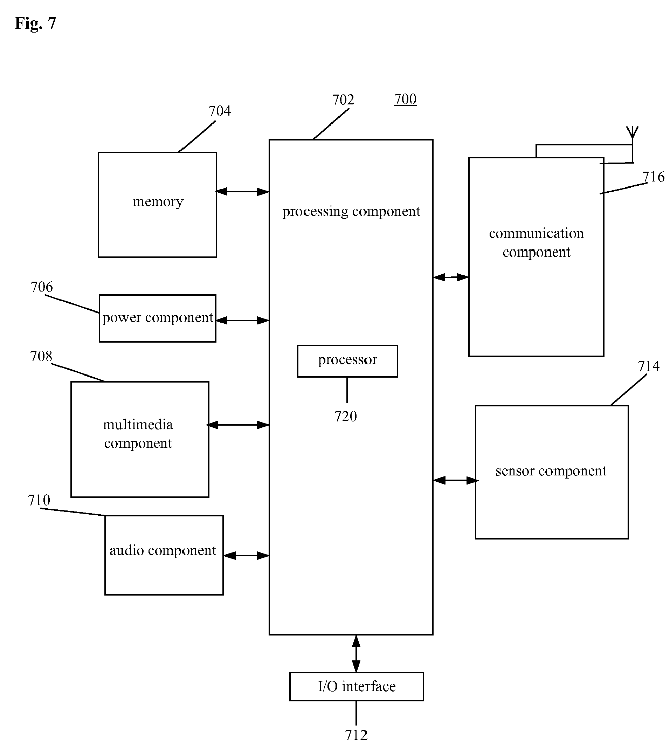

Corresponding to the mobile terminal provided by the above exemplary embodiment, another exemplary embodiment of the present disclosure provides a mobile terminal 700, as shown in Fig. 7. For example, the mobile terminal 700 may be a mobile phone, a computer, a digital broadcast terminal, a messaging device, a gaming console, a tablet, a medical device, exercise equipment, a personal digital assistant and the like.

Referring to Fig. 7, the mobile terminal 700 may include one or more of the following components: a processing component 702, a memory 704, a power component 706, a multimedia component 708, an audio component 710, an Input/Output (I/O) interface 712, a sensor component 715, and a communication component 716.

The processing component 702 typically controls overall operations of the mobile terminal 700, such as the operations associated with display, telephone calls, data communications, camera, and recording. The processing component 702 may include one or more processors 720 to execute instructions to perform all or part of the steps in the abovementioned methods. Moreover, the processing component 702 may include one or more modules which facilitate interaction between the processing component 702 and the other components. For instance, the processing component 702 may include a multimedia module to facilitate interaction between the multimedia component 708 and the processing component 702.

The memory 704 is configured to store various types of data to support the operation of the mobile terminal 700. Examples of such data include instructions for any applications or methods operated on the mobile terminal 700, contact data, phonebook data, messages, pictures, video, etc. The memory 704 may be implemented by any type of volatile or non-volatile memory devices, or a combination thereof, such as a Static Random Access Memory (SRAM), an Electrically Erasable Programmable Read-Only Memory (EEPROM), an Erasable Programmable Read-Only Memory (EPROM), a Programmable Read-Only Memory (PROM), a Read-Only Memory (ROM), a magnetic memory, a flash memory, and a magnetic or optical disk.

The power component 706 provides power for various components of the mobile terminal 700. The power component 706 may include a power management system, one or more power supplies, and other components associated with the generation, management and distribution of power for the mobile terminal 700.

The multimedia component 708 includes a screen providing an output interface between the mobile terminal 700 and the user. In some embodiments, the screen may include a Liquid Crystal Display (LCD) and a Touch Panel (TP). If the screen includes the TP, the screen may be implemented as a touch screen to receive an input signal from the user. The TP includes one or more touch sensors to sense touches, swipes and gestures on the TP. The touch sensors may not only sense a boundary of a touch or swipe action, but also sense a duration and pressure associated with the touch or swipe action. In some embodiments, the multimedia component 708 includes a front camera and/or a rear camera. The front camera and/or the rear camera may receive external multimedia data when the mobile terminal 700 is in an operation mode, such as a photographing mode or a video mode. Each of the front camera and the rear camera may be a fixed optical lens system or have focusing and optical zooming capabilities.

The audio component 710 is configured to output and/or input an audio signal. For example, the audio component 710 includes a microphone (MIC), and the MIC is configured to receive an external audio signal when the mobile terminal 700 is in the operation mode, such as a call mode, a recording mode and a voice recognition mode. The received audio signal may be further stored in the memory 704 or sent through the communication component 716. In some embodiments, the audio component 710 further includes a speaker configured to output the audio signal.

The I/O interface 712 provides an interface between the processing component 702 and a peripheral interface module, and the peripheral interface module may be a keyboard, a click wheel, a button and the like. The button may include, but not limited to: a home button, a volume button, a starting button and a locking button.

The sensor component 715 includes one or more sensors configured to provide status assessment in various aspects for the mobile terminal 700. For instance, the sensor component 715 may detect an on/off status of the mobile terminal 700 and relative positioning of components, such as a display and small keyboard of the mobile terminal 700, and the sensor component 715 may further detect a change in a position of the mobile terminal 700 or a component of the mobile terminal 700, presence or absence of contact between the user and the mobile terminal 700, orientation or acceleration/deceleration of the mobile terminal 700 and a change in temperature of the mobile terminal 700. The sensor component 715 may include a proximity sensor configured to detect presence of an object nearby without any physical contact. The sensor component 715 may also include a light sensor, such as a Complementary Metal Oxide Semiconductor (CMOS) or Charge Coupled Device (CCD) image sensor, configured for use in an imaging application. In some embodiments, the sensor component 715 may also include an acceleration sensor, a gyroscope sensor, a magnetic sensor, a pressure sensor or a temperature sensor.

The communication component 716 is configured to facilitate wired or wireless communication between the mobile terminal 700 and another device. The mobile terminal 700 may access a communication-standard-based wireless network, such as a Wireless Fidelity (WiFi) network, a 2nd-Generation (2G) or 3rd-Generation (3G) network or a combination thereof. In an exemplary embodiment, the communication component 716 receives a broadcast signal or broadcast associated information from an external broadcast management system through a broadcast channel. In an exemplary embodiment, the communication component 716 further includes a Near Field Communication (NFC) module to facilitate short-range communication. For example, the NFC module may be implemented on the basis of a Radio Frequency Identification (RFID) technology, an Infrared Data Association (IrDA) technology, an Ultra-WideBand (UWB) technology, a BlueTooth (BT) technology and another technology.

In the exemplary embodiment, the mobile terminal 700 may be implemented by one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors or other electronic components, and is configured to execute the abovementioned methods.

In the exemplary embodiment, there is also provided a non-transitory computer-readable storage medium including instructions, such as the memory 704 including instructions, and the instructions may be executed by the processor 720 of the mobile terminal 700 to implement the abovementioned methods. For example, the non-transitory computer-readable storage medium may be a ROM, a Random Access Memory (RAM), a Compact Disc Read-Only Memory (CD-ROM), a magnetic tape, a floppy disc, an optical data storage device and the like.

According to the non-transitory computer-readable storage medium, when the instruction in the storage medium is executed by the processor of the mobile terminal, the mobile terminal may execute a method for controlling a mobile terminal, a side TP being arranged in the mobile terminal, the method including:
detecting a touch signal triggered by touch operation of an operating body on a side of the mobile terminal;
determining a touch position and touch manner corresponding to the touch operation according to the touch signal;
determining a corresponding control event according to the touch position and the touch manner; and
controlling the mobile terminal according to the control event.

According to the embodiment of the present disclosure, the touch signal triggered by the touch operation of the operating body on the side of the mobile terminal is detected by the side TP arranged in the mobile terminal, the touch position and touch manner corresponding to the touch operation are determined according to the touch signal, the control event is determined according to the touch position and the touch manner, and the mobile terminal is controlled according to the control event, so that control over the mobile terminal is implemented by the touch operation on the side of the mobile terminal outside a touch area of a screen, and human-computer interactivity is improved.

Other embodiments of the present disclosure will be apparent to those skilled in the art from consideration of the specification and practice of the present disclosure disclosed herein. This application is intended to cover any variations, uses, or adaptations of the present disclosure following the general principles thereof and including such departures from the present disclosure as come within known or customary practice in the art.

### INDUSTRIAL APPLICABILITY

According to the embodiment of the present disclosure, the touch signal triggered by the touch operation of the operating body on the side of the mobile terminal is detected by the side TP arranged in the mobile terminal, the touch position and touch manner corresponding to the touch operation are determined according to the touch signal, the control event is determined according to the touch position and the touch manner, and the mobile terminal is controlled according to the control event, so that control over the mobile terminal is implemented by the touch operation on the side of the mobile terminal outside a touch area of a screen, and human-computer interactivity is improved.

## Claims

1. A method for controlling a mobile terminal, **characterized in that**, a side Touch Panel (TP) is arranged in the mobile terminal and the method comprises:
detecting (101) a touch signal triggered by touch operation of an operating body on a side of the mobile terminal;
determining (102) a touch position and touch manner corresponding to the touch operation according to the touch signal;
determining (103) a corresponding control event according to the touch position and the touch manner; and
controlling (104) the mobile terminal according to the control event.

2. The method according to claim 1, wherein the step of determining (103) the corresponding control event according to the touch position and the touch manner comprises:
selecting (203) the control event corresponding to the touch position and the touch manner from a preset relationship among a touch position, a touch manner and a control event.

3. The method according to claim 1, wherein the touch position comprises a combination of multiple touch positions, and the touch manner comprises a touch manner corresponding to each touch position; and
wherein the step of determining (103) the corresponding control event according to the touch position and the touch manner comprises:
selecting (303) a control event corresponding to the combination of the multiple touch positions and the touch manner corresponding to each touch position from a preset relationship among the touch position, the touch manner and the control event.

4. The method according to any one of claims 1 to 3, further comprising:
setting (401) an option menu configured to configure side touch operation in a system option.

5. The method according to claim 4, further comprising:
recording (402) touch operation of the operating body on the side TP after a user is detected to trigger configuration operation in the option menu, the touch operation comprising a touch position and a touch manner;
receiving (403) a control event selected by the user in the option menu; and
storing (404) the touch position, the touch manner and the control event in the preset relationship among the touch position, the touch manner and the control event.

6. The method according to any one of claims 1 to 3, wherein the control event comprises starting a specified application-level application program or executing a system bottom-layer control instruction; and
wherein the touch manner comprises one or more of: single-click; double-click; long-click; and swipe.

7. A mobile terminal, **characterized in that**, a side Touch Panel (TP) is arranged in the mobile terminal and the mobile terminal comprises:
a detection module (501), configured to detect a touch signal triggered by touch operation of an operating body on a side of the mobile terminal;
a first determination module (502), configured to determine a touch position and touch manner corresponding to the touch operation according to the touch signal;
a second determination module (503), configured to determine a corresponding control event according to the touch position and the touch manner; and
a control module (504), configured to control the mobile terminal according to the control event.

8. The mobile terminal according to claim 7, wherein the second determination module (503) comprises:
a first selection unit (5031), configured to select the control event corresponding to the touch position and the touch manner from a preset relationship among a touch position, a touch manner and a control event.

9. The mobile terminal according to claim 7, wherein the touch position comprises a combination of multiple touch positions, and the touch manner comprises a touch manner corresponding to each touch position; and
wherein the second determination module (503) comprises:
a second selection unit (5032), configured to select a control event corresponding to the combination of the multiple touch positions and the touch manner corresponding to each touch position from the preset relationship among the touch position, the touch manner and the control event.

10. The mobile terminal according to any one of claims 7 to 9, further comprising:
a setting module (505), configured to set an option menu configured to configure side touch operation in a system option.

11. The mobile terminal according to claim 10, further comprising:
a recording module (506), configured to record touch operation of the operating body on the side TP after a user is detected to trigger configuration operation in the option menu, the touch operation comprising a touch position and a touch manner;
a receiving module (507), configured to receive a control event selected by the user in the option menu; and
a storage module (508), configured to store the touch position, the touch manner and the control event in the preset relationship among the touch position, the touch manner and the control event.

12. The mobile terminal according to any one of claims 7 to 9, wherein the control event comprises starting a specified application-level application program or executing a system bottom-layer control instruction; and
wherein the touch manner comprises one or more of: single-click; double-click; long-click; and swipe.

13. A mobile terminal, **characterized in that**, a side Touch Panel (TP) is arranged in the mobile terminal and the mobile terminal comprises:
a processor (720); and
a memory (704) configured to store an executable instruction by the processor,
wherein the processor is configured to carry out the method of any of claims 1 to 6.

14. A computer program including instructions for executing the steps of a method for controlling a mobile terminal according to any one of claims 1 to 6 when said program is executed by a computer.

15. A recording medium readable by a computer and having recorded thereon a computer program including instructions for executing the steps of a method for controlling a mobile terminal according to any one of claims 1 to 6.
